# EUROPEAN PATENT APPLICATION

(11) **EP 2 654 353 A2**
(43) Date of publication of application: **23.10.2013**
(21) Application number: 13164677.0
(22) Date of filing: 22.04.2013
(51) Int. Cl.: H04W 56/00

(54) **Method of managing discontinuous reception functionality**

(30) Priority: 20.04.2012 US 201261635868 P; 15.01.2013 TW 102101519
(71) Applicant: Acer Incorporated, New Taipei City 221 (TW)
(72) Inventor: Ye, Shiang-Rung, 221 New Taipei City (TW)
(74) Representative: Becker Kurig Straus

(57) **Abstract**

A method of managing discontinuous reception (DRX) functionality for a network of a wireless communication system includes receiving information associated with a setting change from a mobile device of the wireless communication system, and configuring the DRX functionality for the mobile device according to the information received.

## Description

### Field of the Invention

The application relates to a method utilized in a wireless communication system, and more particularly, to a method of managing discontinuous reception functionality in a wireless communication system.

### Background of the Invention

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, an evolved universal terrestrial radio access network (E-UTRAN) includes a plurality of evolved Node-Bs (eNBs) and communicates with a plurality of mobile stations, also referred as user equipments (UEs).

In the LTE system, the UE may be configured with a Discontinuous Reception (DRX) functionality, which allows the UE to monitor a signaling transmission of a Physical Downlink Control Channel (PDCCH) during a specific period of time, so as to reduce a power consumption of the UE. Noticeably, the DRX functionality shall be configured by the eNB and a setting may include a short DRX cycle and a long DRX cycle. In detail, a DRX cycle may include a waking period and a sleeping period. If the UE receives a packet during the waking period, the waking period shall be extended, which allows the UE to wait for possible incoming packets. In other words, the eNB tends to configure the DRX cycle having a longer waking period to the UE so that the UE may receive the possible incoming packets.

If the UE is configured with a longer waking period, it can deliver received Internet Protocol (IP) packets to applications without much delay to provide a good user experience, but the configuration of the DRX functionality may lead to expensive power consumption to the UE. In contrast, if the UE is configured with a longer sleeping period, it can save more power, but may delay real-time packets. However, the LTE system specification does not currently specify how the eNB shall select proper lengths for waking/sleeping periods to configure the DRX functionality for the UE, which leads to the abovementioned problem.

### Summary of the Invention

The present invention aims at providing a method of managing discontinuous reception functionality in a wireless communication system in order to solve the aforementioned problem.

This is achieved by a method of managing discontinuous reception functionality according to claims 1, 4 and 12. The dependent claims pertain to corresponding further developments and improvements.

As will be seen more clearly from the following detailed description, the claimed method of managing discontinuous reception (DRX) functionality for a mobile device of a wireless communication system is disclosed herein. The method comprises transmitting information associated with a setting to a network of the wireless communication system when the setting of the mobile device is changed such that the network configures the DRX functionality for the mobile device according to the information.

In another aspect of the invention, the claimed method of managing discontinuous reception (DRX) functionality for a network of a wireless communication system is disclosed in the detailed description here below. The method comprises receiving information associated with a setting change from a mobile device of the wireless communication system, and configuring the DRX functionality for the mobile device according to the information received.

In another aspect of the invention, the claimed method of managing discontinuous reception (DRX) functionality for a mobile device of a wireless communication system is disclosed in the detailed description here below. The method comprises the step of configuring the DRX functionality for the mobile device according to a setting of the mobile device when the setting of the mobile device is changed.

In another aspect of the invention, the claimed communication system for managing discontinuous reception (DRX) functionality is disclosed in the detailed description here below. The system comprises a mobile device for transmitting information associated with a setting of the mobile device when the setting is changed, and a network for configuring DRX functionality for the mobile device according to the information associated with a setting change of the mobile device received from the mobile device.

### Brief Description of the Drawings

Fig. 1 is a schematic diagram of an exemplary wireless communication system.
Fig. 2 is a schematic diagram of an exemplary communication device.
Fig. 3-5 are schematic diagrams of managing DRX functionality according to several embodiments of the invention.

### Detailed Description

The invention bases itself on the principle that reception functionality of the discontinuous reception (DRX) functionality requires a varying amount of time and this time can be controlled by the network.

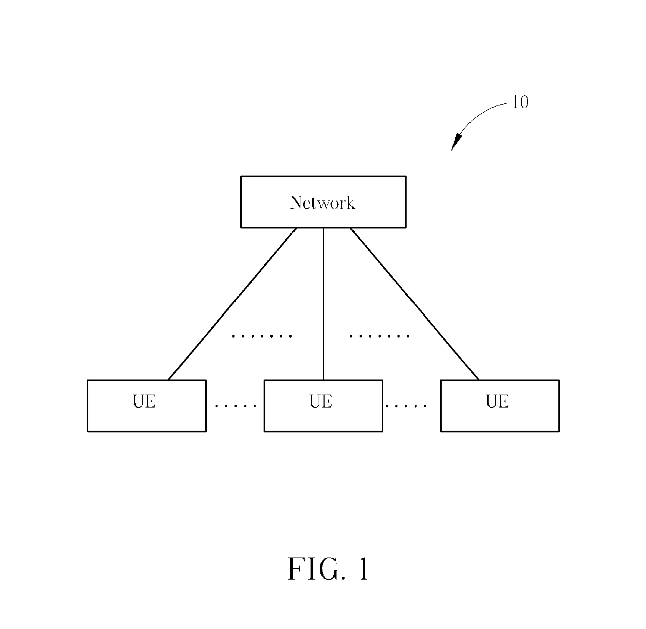

Fig. 1 is a schematic diagram of a wireless communication system 10, which is a Long-Term Evolution (LTE) system, and is composed of a network and a plurality of user equipments (UEs). In Fig. 1, the network and the UEs are simply utilized for illustrating the structure of the wireless communication system 10. Practically, the network may be an evolved universal terrestrial radio access network (E-UTRAN) comprising a plurality of evolved base stations (eNBs). The UEs may be devices such as mobile phones, computer systems, etc. Furthermore, the network and the UE according to the invention may be a transmitter or receiver according to transmission direction, e.g., for uplink (UL), the UE is the transmitter and the network is the receiver, and for downlink (DL), the network is the transmitter and the UE is the receiver.

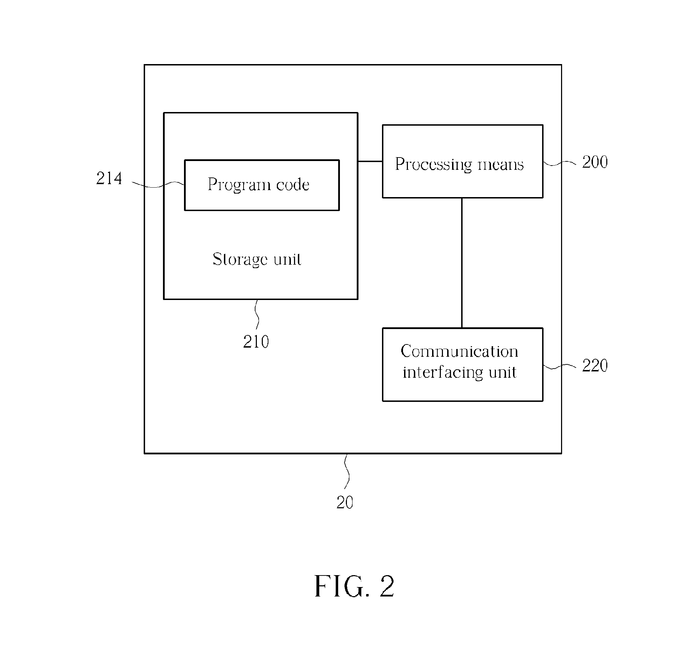

Fig. 2 is a schematic diagram of a communication device 20. The communication device 20 may be the UE shown in Fig. 1, but is not limited herein. The communication device 20 may include a processing means 200 such as a microprocessor or Application Specific Integrated Circuit (ASIC), a storage unit 210 and a communication interfacing unit 220. The storage unit 210 may be any data storage device that can store program code 214, for access by the processing means 200. Examples of the storage unit 210 include, but are not limited to, a subscriber identity module (SIM), read-only memory (ROM), flash memory, random-access memory (RAM), CD-ROMs, magnetic tape, hard disk, and optical data storage device. The communication interfacing unit 220 is preferably a radio transceiver and can exchange wireless signals with the network according to processing results of the processing means 200.

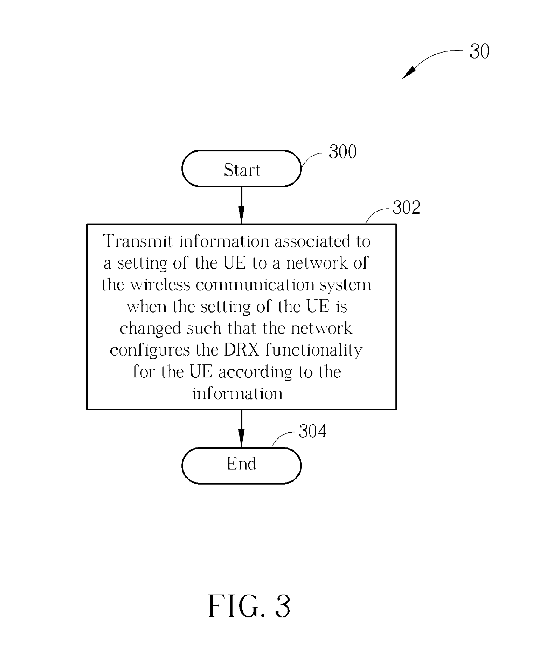

Fig. 3 is a flowchart of a process 30 which is an example process according to the invention. The process 30 is utilized in a UE of a wireless communication system for managing DRX functionality to reduce power consumption of the UE. The process 30 may be compiled into the program code 214 and includes the following steps:
- Step 300:: Start.
- Step 302:: Transmit information associated with a setting of the UE to a network of the wireless communication system when the setting of the UE is changed so that the network configures the DRX functionality for the UE according to the information transmitted.
- Step 304:: End.

According to process 30, when the setting of the UE is changed, e.g. an application mode, as result of power consumption or a required network response time changed by a user, the UE may report the information associated with the setting, i.e. the power consumption or the required network response time, to the network, and thus the network, e.g. an eNB, may configure a length of the waking/sleeping period of the DRX functionality for the UE.

For example, the UE may transmit the information of low power consumption to the network when the power consumption of the UE is set to a low power consumption mode by the user. The network may decrease the time required for performing reception functionality, i.e. increase the waking period or decrease the sleeping period, after the information is received. The UE may transmit information of high power consumption to the network when the power consumption of the UE is set to a high power consumption mode. The network may increase the time required for performing reception functionality, i.e. increase the waking period or decrease the sleeping period, after the information is received. The network may therefore utilize the information associated with the setting change to determine a parameter related to power consumption (power parameter), such as the abovementioned example where a network may increase or decrease the sleeping period to change the power consumption, which may effectively save the power consumption of the UE without a disadvantageous effect or influence on the user experience.

In another embodiment, the UE may transmit information associated with a required network response time to the network when the required network response time is decreased. The network may increase the time required for performing reception functionality of the DRX functionality, i.e. decrease the sleeping period or increase the waking period, after the information is received. The UE may also transmit information associated with a required network response time to the network when the required network response time is increased. The network may decrease the time required for performing reception functionality of the DRX functionality, i.e. increase the sleeping period or decrease the waking period, after the information is received. The user may thus determine whether to lengthen the network response time to change the power consumption of the UE.

In another embodiment, the user is usually allowed to change an application mode of the UE. The application mode may be a state of activities which may further affect the power consumption of the UE to the network. For example in an UE with a screen, sound and vibration activities, the UE may be set with a first application mode which indicates the state of screen as being switched on, a second application mode which indicates the state of screen as being switched off and sound on and a third application mode which indicates the screen being switched off, sound being switched off and vibration being switched off. Please note that the application mode of the UE is not limited to above examples. For example, the first application mode may indicate the state of the screen being switched on, the second application mode may indicate the state of the screen being switched off, sound being switched off and vibration being switched on and the third application mode may indicate the state of the screen being switched off, sound being switched off and vibration being switched off. The UE may transmit information associated with an application mode change to the network when the UE is changed from a first application mode to a second application mode by the user. If the power consumption corresponding to the second application mode is greater than the power consumption corresponding to the first application mode, the network may increase the time required for performing reception functionality, i.e. decrease sleeping period or increase waking period. If the power consumption corresponding to the second application mode is less than the power consumption corresponding to the first application mode instead, the network may decrease the time required for performing reception functionality, i.e. increase sleeping period or decrease waking period.

The present invention may derive the required network response time of the UE according to a setting of the application mode. For example, the UE may be set in either a first application mode which indicates the user is using a mobile phone such as playing games or watching internet television/video or a second application mode which indicates the mobile phone is disposed by the user in a pocket/bag and the user would like to know any incoming calls/short messages or application notifications or a third application mode which indicates the user does not want any sound or vibration to indicate a new call/SMS/app notification from the mobile phone. Therefore, the network response time corresponding to the third application mode is greater than a network response time corresponding to the second application mode, and the network response time corresponding to the second application mode is greater than a network response time corresponding to the first application mode. The UE may transmit information associated with the application mode change to the network when the UE is changed from the first application mode to the second application mode. If the network response time corresponding to the second application mode is greater than the network response time corresponding to the first application mode, the network may decrease the time required for performing reception functionality of DRX functionality, i.e. increase the sleeping period or decrease the waking period, after the information is received. If the network response time corresponding to the second application mode is less than the network response time corresponding to the first application mode instead, the network may increase the time required for performing reception functionality of DRX functionality, i.e. decrease the sleeping period or increase the waking period, after the information is received.

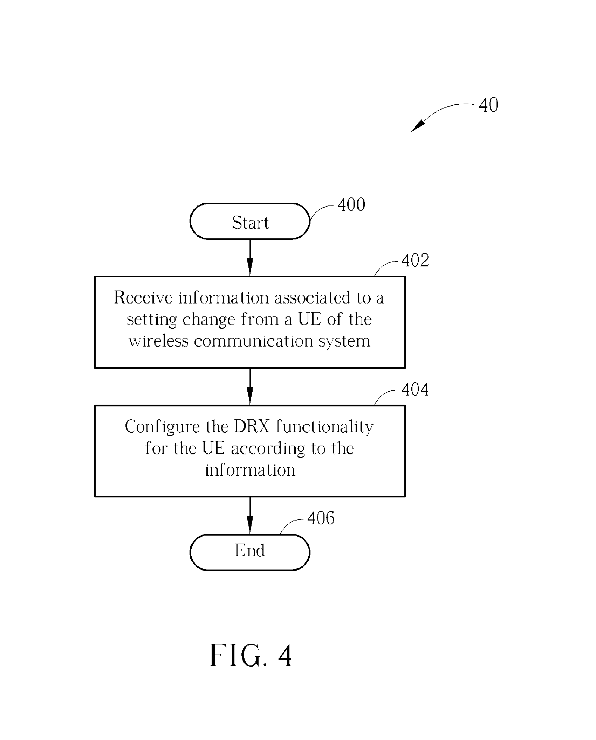

Fig. 4 is a flowchart of process 40, which is an example process according to the invention. The process 40 is utilized in a network of a wireless communication system for managing DRX functionality. The process 40 may be compiled into the program code 214 and includes the following steps:
- Step 400:: Start.
- Step 402:: Receive information associated with a setting change from a UE of the wireless communication system.
- Step 404:: Configure the DRX functionality for the UE according to the information received.
- Step 406:: End.

According to process 40, when the network receives information associated with the setting change such as a change in power consumption, an application mode or a require network response time from the UE, the network may set lengths of waking/sleeping periods of a DRX cycle according to the information associated with the setting change. Therefore, the network may utilize the information associated with the setting change to determine a power parameter of the UE, which may effectively save power of the UE without disadvantageous effect or influence to the user experience.

For example, the network may decrease the time required for performing reception functionality, i.e. increase the sleeping period or decrease the waking period, when the network receives the information of low power consumption from the UE. On the other hand, the network may increase the time required for performing reception functionality, i.e. decrease the sleeping period or increase the waking period, when the network receives the information of high power consumption from the UE. Noticeably, details about the UE, which transmits to the network the information associated with the setting change, may be obtained by referring to above description.

In another embodiment, the network may increase the time required for performing reception functionality, i.e. increase the waking period or decrease the sleeping period, when the network receives information to decrease network response time from the UE. On the other hand, the network may decrease the time required for performing reception functionality, i.e. decrease the waking period or increase the sleeping period, when the network receives information to increase the sleeping period from the UE.

In another embodiment, the network may increase the time required for performing reception functionality, i.e. increase the waking period or decrease the sleeping period, when the network receives information of application mode change from the UE, wherein the information indicates the UE is changed from a first application mode to a second application mode and the power consumption corresponding to the second application mode is greater than the power consumption corresponding to the first application mode. In the opposite case, the network may decrease the time required for performing reception functionality, i.e. decrease the waking period or increasing the sleeping period, when the network receives the information of application mode change from the UE, wherein the power consumption corresponding to the second application mode is less than the power consumption corresponding to the first application mode. Details about the application mode of the UE may be obtained by referring to the above description.

In another embodiment, the network may decrease the time required for performing reception functionality, i.e. decrease the waking period or increasing the sleeping period, when the network receives information of application mode change from the UE, wherein the information indicates the UE is changed from a first application mode to a second application mode and a network response time corresponding to the second application mode is greater than a network response time corresponding to the first application mode. In the opposite case, the network may increase the time required for performing reception functionality, i.e. increase the waking period or decrease the sleeping period, when the network receives information of application mode change from the UE, wherein the network response time corresponding to the second application mode is less than the network response time corresponding to the first application mode. Details about the application mode of the UE may be obtained by referring to above description.

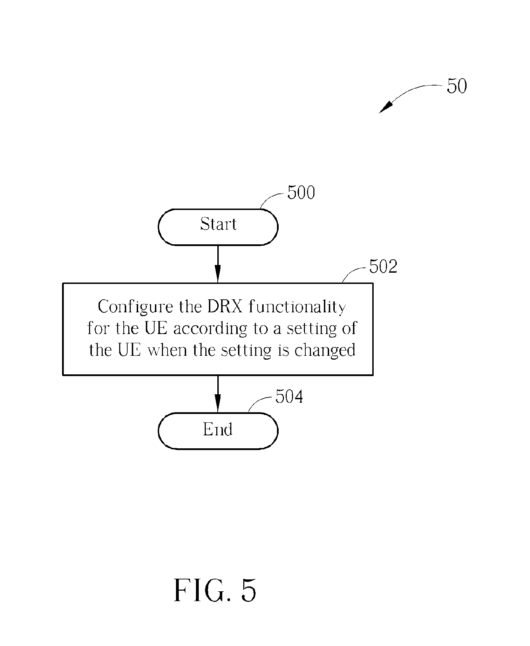

Fig. 5 is a flowchart of a process 50, which is an example process according to the invention. The process 50 is utilized in a UE of a wireless communication system for managing DRX functionality to reduce power consumption of the UE. The process 50 may be compiled into the program code 214 and includes the following steps:
- Step 500:: Start.
- Step 502:: Configure the DRX functionality for the UE according to a setting of the UE when the setting is changed.
- Step 504:: End.

According to process 50, when a setting of the UE is changed, e.g. power consumption, an application mode or a required network response time as changed by a user, the UE may configure lengths of waking/sleeping periods of the DRX functionality for the UE according to the new setting, i.e. the power consumption, the application mode or the required network response time after the change.

For example, the UE may decrease the time required for performing reception functionality when the power consumption of the UE is set to a lower power consumption mode, and the UE may increase the time required for performing reception functionality when the power consumption of the UE is set to a high power consumption mode. In an embodiment, the UE may increase the time required for performing reception functionality when the required network time of the UE is decreased, and the UE may decrease the time of performing reception functionality when the required network time of the UE is increased. In another embodiment, the UE may increase the time required for performing reception functionality when the application mode of the UE is changed from a first application mode to a second application mode, and a power consumption corresponding to the second application mode is greater than a power consumption corresponding to the first application mode. In the opposite case, the UE may decrease the time required for performing reception functionality when the power consumption corresponding to the second application mode is less than the power consumption corresponding to the first application mode. Further, the application mode may indicate the required network response time of the UE. Thus, the UE may decrease the time required for performing reception functionality when the required network response time is increased, and the UE may increase the time of performing reception functionality when the required network response time is decreased. Details of the application mode, e.g. states of screen being on/off, sound being on/off and vibration being on/off, may be obtained by referring to above description.

The abovementioned steps of the processes, including the suggested steps, may be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (Sip), computer on module (COM), and the communication device 20.

The embodiments of the invention provide methods of managing discontinuous reception (DRX) for the UE and the network by utilizing information associated with setting change of the UE, so as to reduce or increase the power consumption of the UE. The UE or the network may derive the setting of the DRX corresponding to an application mode or power consumption by mapping or specific calculations according to the application mode and the power consumption, so as to change the setting for the DRX functionality.

## Claims

1. A method (30) of managing discontinuous reception (DRX) functionality for a mobile device of a wireless communication system, **characterized by** the method (30) comprising the step of:
transmitting information associated with a setting to a network of the wireless communication system when the setting of the mobile device is changed such that the network configures the discontinuous reception (DRX) functionality for the mobile device according to the information transmitted(302).

2. A method (40) of managing discontinuous reception (DRX) functionality for a network of a wireless communication system, **characterized by** the method (40) comprising the steps of:
receiving information associated with a setting change from a mobile device of the wireless communication system (402); and
configuring the discontinuous reception (DRX) functionality for the mobile device according to the information received(404).

3. A method (50) of managing discontinuous reception (DRX) functionality for a mobile device of a wireless communication system, **characterized by** the method (50) comprising the step of:
configuring the discontinuous reception (DRX) functionality for the mobile device according to a setting of the mobile device when the setting of the mobile device is changed (502).

4. A communication system (10), for managing discontinuous reception (DRX) functionality, **characterized by** the communication system (10) comprising:
a mobile device for transmitting information associated with a setting of the mobile device when the setting is changed; and
a network for configuring a discontinuous reception (DRX) functionality for the mobile device according to the information when the information associated with a setting change of the mobile device is received from the mobile device.

5. The method (30, 40) of claim 1 or claim 2, or the communication system (10) of claim 4, **characterized in that** the information indicates an application mode, a power consumption or a required network response time of the mobile device.

6. The method (50) of claim 3, **characterized in that** the setting indicates an application mode, a power consumption or a required network response time of the mobile device.

7. The method (40) of claim 5, **characterized in that** the step of configuring the discontinuous reception (DRX) functionality for the mobile device according to the information received(404) comprises the step of:
decreasing time required for performing reception functionality of the discontinuous reception (DRX) functionality when the information indicates the mobile device is set to a low power consumption mode; or
increasing time required for of performing reception functionality of the discontinuous reception (DRX) functionality when the information indicates the mobile device is set to a high power consumption mode; or
the step of:
increasing time required for performing reception functionality of the discontinuous reception (DRX) functionality when the information indicates the required network response time of the mobile device is decreased;
or
decreasing the time required for performing reception functionality of the discontinuous reception (DRX) functionality when the information indicates the required network response time of the mobile device is increased; or
the step of:
increasing time required for performing reception functionality of the discontinuous reception (DRX) functionality when the information indicates the mobile device is set from a first application mode to a second application mode, and power consumption corresponding to the second application mode is greater than a power consumption corresponding to the first application mode; or
decreasing time required for performing reception functionality of the discontinuous reception (DRX) functionality when the information indicates the mobile device is set from a first application mode to a second application mode, and power consumption corresponding to the second application mode is less than a power consumption corresponding to the first application mode; or
the step of:
decreasing time required for performing reception functionality of the discontinuous reception (DRX) functionality when the information indicates the mobile device is set from a first application mode to a second application mode, and a network response time corresponding to the second application mode is greater than a network response time corresponding to the first application mode; or
increasing time required for performing reception functionality of the discontinuous reception (DRX) functionality when the information indicates the mobile device is set from a first application mode to a second application mode, and a network response time corresponding to the second application mode is less than a network response time corresponding to the first application mode; or
the steps of:
deriving the setting of the discontinuous reception (DRX) functionality according to the information by mapping or calculation; and
configuring the discontinuous reception (DRX) functionality of the mobile device according to the derived setting of the discontinuous reception (DRX) functionality.

8. The method (50) of claim 6, **characterized in that** the step of configuring the discontinuous reception (DRX) functionality for the mobile device according to the setting of the mobile device when the setting of the mobile device is changed (502) comprises the step of:
decreasing time required for performing reception functionality of the discontinuous reception (DRX) functionality when the information indicates the mobile device is set to a low power consumption mode; or
increasing time required for performing reception functionality of the discontinuous reception (DRX) functionality when the information indicates the mobile device is set to a high power consumption mode; or
the step of:
increasing time required for performing reception functionality of the discontinuous reception (DRX) functionality when the setting is the required network response time of the mobile device, and the required network response time is decreased; or
decreasing time required for performing reception functionality of the discontinuous reception (DRX) functionality when the required network response time is increased; or
the step of:
increasing time required for performing reception functionality of the discontinuous reception (DRX) functionality when the setting is the application mode which is changed from a first application mode to a second application mode, and power consumption corresponding to the second application mode is greater than power consumption corresponding to the first application mode; or dec
reasing time required for performing reception functionality of the discontinuous reception (DRX) functionality when the application mode is changed from a first application mode to a second application mode, and power consumption corresponding to the second application mode is less than power consumption corresponding to the first application mode; or
the step of:
decreasing time required for performing reception functionality of the discontinuous reception (DRX) functionality when the setting is the application mode which is changed from a first application mode to a second application mode, and a network response time corresponding to the second application mode is greater than a network response time corresponding to the first application mode; or
increasing time required for performing reception functionality of the discontinuous reception (DRX) functionality when the application mode which is changed from a first application mode to a second application mode, and a network response time corresponding to the second application mode is less than a network response time corresponding to the first application mode; or
the steps of:
deriving the setting of the discontinuous reception (DRX) functionality according to the information by mapping or calculation; and
configuring the discontinuous reception (DRX) functionality of the mobile device according to the derived setting of the discontinuous reception (DRX) functionality.

9. The communication system (10) of claim 5, **characterized in that** the network is further used for decreasing time required for performing reception functionality of the discontinuous reception (DRX) functionality when the mobile device is set to a low power consumption mode, or increasing time required for performing reception functionality of the discontinuous reception (DRX) functionality when the mobile device is set to a high power consumption mode.

10. The communication system (10) of claim 5, **characterized in that** the network is further used for increasing time required for performing reception functionality of the discontinuous reception (DRX) functionality when the information indicates the required network response time of the mobile device is decreased, or decreasing time required for performing reception functionality of the discontinuous reception (DRX) functionality when the information indicates the required network response time is increased.

11. The communication system (10) of claim 5, **characterized in that** the network is further used for increasing time required for performing reception functionality of the discontinuous reception (DRX) functionality when the information indicates the mobile device is changed from a first application mode to a second application mode, and a power consumption corresponding to the second application mode is greater than a power consumption corresponding to the first application mode; or decreasing time required for performing reception functionality of the discontinuous reception (DRX) functionality when the information indicates the mobile device is changed from a first application mode to a second application mode, and a power consumption corresponding to the second application mode is less than a power consumption corresponding to the first application mode.

12. The communication system (10) of claim 5, **characterized in that** the mobile device is further used for decreasing time required for performing reception functionality of the discontinuous reception (DRX) functionality when the information indicates the mobile device is changed from a first application mode to a second application mode, and a network response time corresponding to the second application mode is greater than a network response time corresponding to the first application mode; or increasing time required for performing reception functionality of the discontinuous reception (DRX) functionality when the information indicates the mobile device is changed from a first application mode to a second application mode, and a network response time corresponding to the second application mode is less than a network response time corresponding to the first application mode.

13. The communication system (10) of claim 4, **characterized in that** the network derives a setting of the discontinuous reception (DRX) functionality by mapping or calculation; and configures the discontinuous reception (DRX) functionality of the mobile device according to the setting of the discontinuous reception (DRX) functionality.

14. The method (30, 40) of claim 5, or the method (50) of claim 6, or the communication system (10) of claim 5, **characterized in that** the application mode is a state of activities of the mobile device, and the state of activities comprises one or more of the following activities: screen being on/off, a ring-tone volume being on/off and vibration being on/off.
